# EUROPEAN PATENT APPLICATION

(11) **EP 0 926 536 A1**
(43) Date of publication of application: **30.06.1999**
(21) Application number: 97310543.0
(22) Date of filing: 23.12.1997
(51) Int. Cl.: G02F 1/1339, G02F 1/1333

(54) **Tunable optical device**

(71) Applicant: BRITISH TELECOMMUNICATIONS public limited company, London EC1A 7AJ (GB)
(72) Inventor: Kershaw, Stephen Vincent, Ipswich, Suffolk, IP1 6PL (GB)
(74) Representative: Read, Matthew Charles

(57) **Abstract**

A method of fabricating a tunable optical device, and a device fabricated according to the method, where the tuning means include a liquid crystal material (5) in an enclosed cavity (3) fabricated over an optical element (1), typically a waveguide, and the cavity is created by the removal, through selective etching, of a layer of quaternary indium gallium arsenide phosphide (18) through a slot (8) etched in a layer of indium phosphide (4) formed over the quaternary layer.

## Description

This invention relates to a method of fabricating a tunable optical device, and to a device fabricated using this method, which has particular but not exclusive application in the direct integration of tuning means with optical elements including sources, waveguides, amplifiers and detectors.

It is known to use selectively variable refractive index material, for example liquid crystals, for low cost optical switching and filter functions. Although the switching speeds of liquid crystal materials are relatively slow, the electro-optic coefficients far surpass those of any other class of materials, making them ideal for use in tunable optical systems. Few attempts have been made to directly integrate them with guided wave devices, but "through-plane" liquid crystal arrays have been made for Spatial Light Modulator ("SLM") applications, consisting of liquid crystal layers over silicon transistor arrays, in which light is incident at or near 90° to the device substrate and passes through the plane of the substrate. These are typically used in optical signal processing and display devices. However, such devices require a transparent glass superstrate, limiting the minimum device size.

The present invention provides a method of fabricating a tunable optical device that includes a selectively variable refractive index material in a cavity, including overlaying a first material with a second material, forming an access opening in the second material to the first material and removing the first material selectively through the access opening so as to form the cavity.

An advantage of this method is that it provides for the direct integration of the optical element and the tuning means, and so enables the formation of a very compact package which can avoid alignment problems, whilst also reducing the overall device size. A further advantage of the method is that it may reduce the fabrication complexity. Size and complexity reductions in turn lead to cost reductions making the resulting devices more suitable for many communications applications, especially those in which cost is a significant factor, for example, in the portion of a telecommunications network between the customer and the local exchange, which is known as the Access Network, and in particular in equipment to be located at customer premises (Customer Premises Equipment).

The method of the invention may be used to create low cost modulators, tunable filters or sources in a waveguide configuration, where the incident radiation travels substantially parallel to the device substrate, and which is particularly suited to Customer Premises Equipment or Access Network systems use. At wavelengths above the cut-off of the substrate, typically above 1µm, arrays of such devices may be used "through-plane" as Spatial Light Modulators for complex optical signal routing known as free space switching, in which the arrays are selectively driven to process different beams of incident radiation in parallel.

Preferably, in a method according to the invention, indium phosphide is used as the second material and quaternary indium gallium arsenide phosphide (InGaAsP) ("the quaternary material") as the first material, which is removed to form the cavity. The quaternary material may be accessed through the indium phosphide by forming a slot in the latter material and using a wet etchant to remove the quaternary material, followed by regrowth of the indium phosphide to refill the etch slot. This approach allows cavities of variable length to be created depending on the desired function of the cavity.

The cavity may be filled with liquid crystal material which may be oriented by surface gratings formed within the cavity prior to filling.

Embodiments of the invention will now be described, by way of example, with reference to the accompanying drawings, in which:
Figure 1 is a schematic sectional view of a first embodiment of a device fabricated in accordance with the method of the invention;
Figure 2 is a plan view of the device of Figure 1;
Figures 3(a) - (f) show the steps required to fabricate a waveguide in the device of Figure 1;
Figures 4(a) - (f) show the steps required to fabricate the buried cavity in the device of Figure 1;
Figure 5 is a side cross-sectional view of a tunable laser fabricated in accordance with the claimed method;
Figure 6(a) shows a plan view of another device fabricated in accordance with the claimed method; and
Figure 6(b) shows an alternative structure for the embodiment in Figure 6(a).

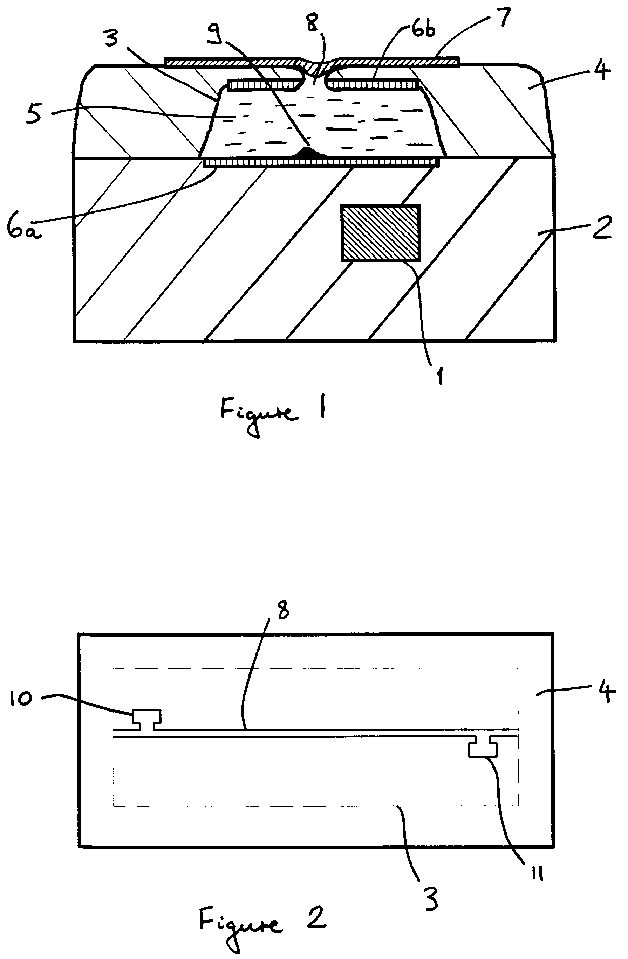

Referring to Figure 1, the device fabricated in accordance with the invention consists of an optical element 1, typically a waveguide, fabricated in an indium phosphide substrate 2 overlaid by a cavity 3 formed in an indium phosphide layer 4 and filled with liquid crystal material 5, which is aligned by surface alignment gratings 6a and 6b. A sealing layer 7 of indium phosphide overlies the layer 4 and seals the slot 8 in the indium phosphide layer 4 which provides access to the cavity 3. The slot 8 is offset from the centre of the waveguide 1 to prevent the residue 9 from the sealing layer 7 destroying the liquid crystal alignment over the waveguide 1.

The sealing layer 7 is not shown in Figure 2, so that details of the access to the cavity 3 may be seen. A well 10 at the side of the slot 8 is used to fill the cavity 3 with liquid crystal material 5. The well is 100µm square and is not covered by the sealing layer 7. A similarly uncovered well 11 is maintained at the end of the slot 8 furthest from the well 10 to avoid the formation of air bubbles during filling.

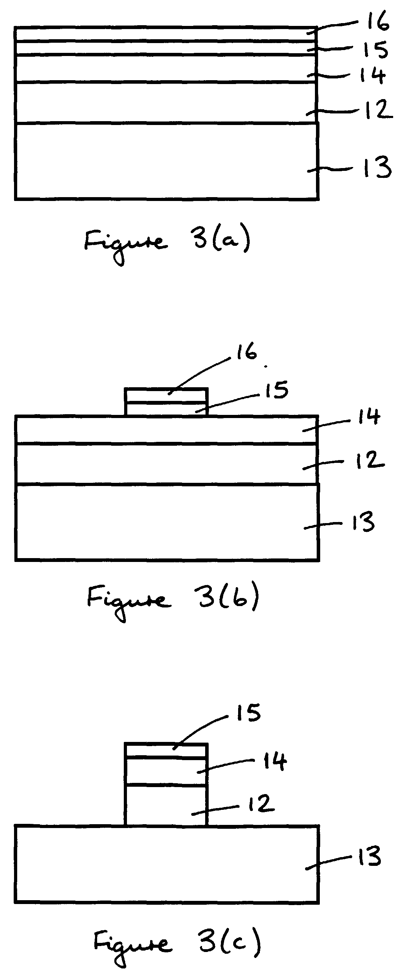

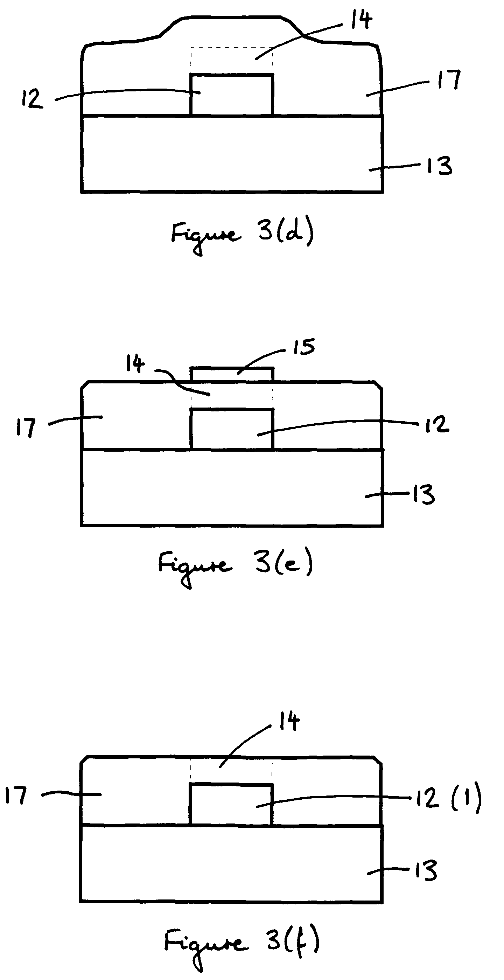

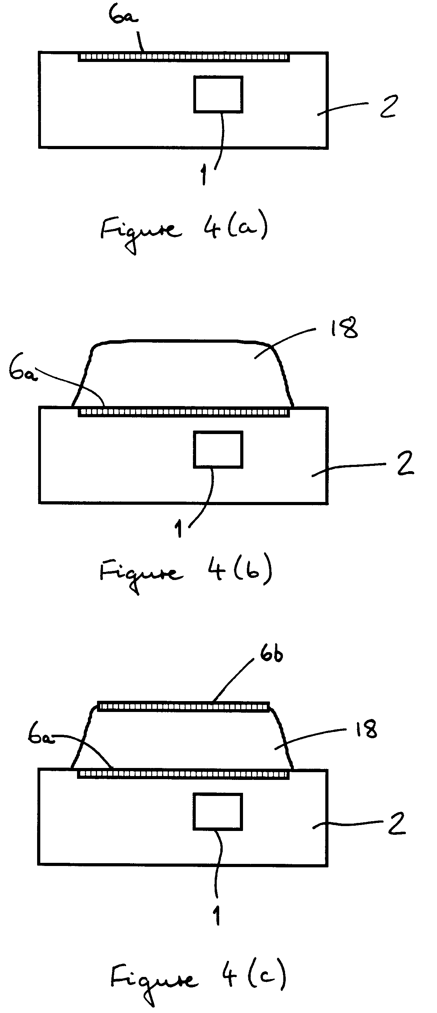

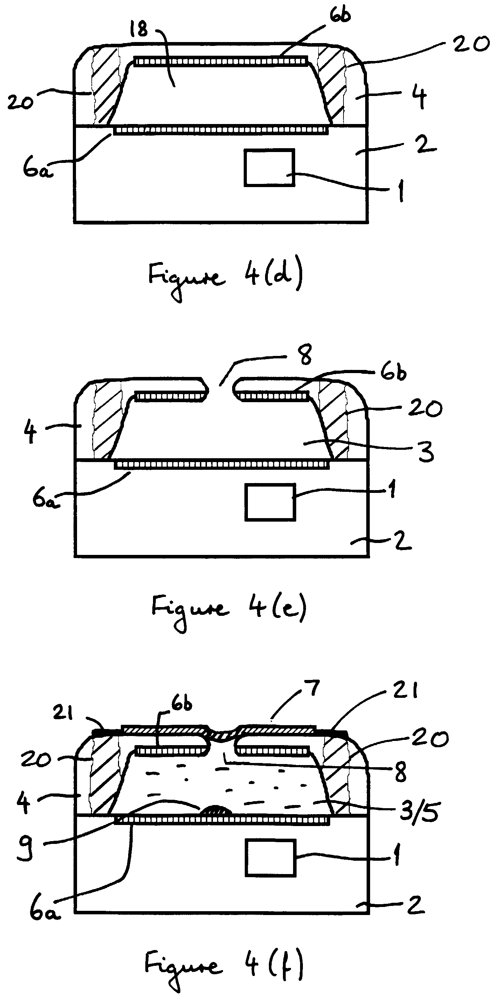

Figures 3 and 4 show the fabrication steps for the device. Referring to Figures 3(a) - (f), a buried, passive waveguide in indium phosphide may be formed by growing a 0.4µm thick layer of quaternary material 12 on an indium phosphide wafer 13. The composition of the quaternary material is prepared such that the bandgap is of the order of 200nm lower than the desired operating wavelength, for example, 1.3µm for an operating wavelength of 1.55µm, so that the material is relatively transparent at the operating wavelength. The refractive index of the quaternary material with a bandgap of 1.3µm is about 3.38. The refractive index of indium phosphide at a wavelength of 1.55µm is around 3.167. These refractive indices are suitable for forming a single mode optical waveguide at a wavelength of 1.55µm.

The quaternary material 12 is coated with a 300nm thick layer of indium phosphide 14 followed by a 50nm thick layer of silicon dioxide film 15 as a mask layer, for example, PYROX, from M.TECH Ltd., Herts, UK. Referring to Figure 3(a), the surface of the silicon dioxide film 15 is coated with a standard photoresist 16 such as MPR 507 available from OCG Microelectronics Materials Division, Coventry, UK. A 1 - 2µm wide waveguide track is then exposed in the resist using a UV source and photomask. The resist is developed and a fluorine based etch, for example, buffered hydrofluoric acid, is used to cut the waveguide into the silicon dioxide layer 15, as shown in Figure 3(b). The resist 16 is then stripped using a solvent such as acetone and the excess indium phosphide 14 etched away using a selective etch, for example a bromine/ methanol mixture. The excess quaternary material 12 is similarly removed with a quaternary selective etch, for example, a sulphuric acid/ hydrogen peroxide/ water mixture, forming the structure shown in Figure 3(c). Finally, the silicon dioxide layer 15 is stripped away using a fluorine based etch, for example, buffered hydrofluoric acid for a wet etch or sulphur hexafluoride (SF₆) for a dry etch. A further epitaxial layer of indium phosphide 17, for example 1µm thick, is grown over the wafer 13, by a technique such as MOVPE (metal organic vapour phase epitaxy) producing the device shown in Figure 3(d).

In an alternative embodiment, to make the device planar rather than ridged, the silicon dioxide layer 15 is left in place during the last stage of growth of the indium phosphide layer 17. Growth is stopped when the indium phosphide layer 17 is level with the top of the indium phosphide layer 14, as shown in Figure 3(e). No indium phosphide growth occurs on the silicon dioxide layer 15 since indium phosphide will not grow epitaxially on a silica layer. Finally, the silicon dioxide layer 15 is stripped using a fluorine based etch as before, producing the buried waveguide device shown in Figure 3(f). It will be understood that the region 12 of quaternary material corresponds to the buried waveguide 1 shown in Figure 1. This waveguide is suitable for the further processing shown in Figure 4.

Referring to Figure 4(a), the surface alignment grating 6a is first formed on the surface of the substrate 2 by a standard lithographical technique. The pitch of the grating is not too critical from the point of view of liquid crystal alignment, but should be chosen to avoid appreciable Bragg reflection at the device wavelength, with the depth being kept to a minimum if Bragg reflection effects are not needed. Typically, the grating is formed in a layer 50nm thick with pitch of 2µm, using lithographical techniques similar to those used to form the optical element 1. For example, an indium phosphide wafer is covered with a layer of silicon dioxide, such as PYROX, to a depth of typically 50-100nm, to act as an etch mask. The silicon dioxide coated wafers are then coated with photoresist and the pattern is exposed in the resist using a UV source and a photomask. The resist is developed and a fluorine based etch used to cut the pattern into the silicon dioxide layer. The indium phosphide layer is etched through the silicon dioxide layer using a bromine/methanol mixture as before to a depth of, for example, 50nm. The silicon dioxide layer is then removed using a fluorine based etch as before. Alternatively, adequate liquid crystal alignment may be obtained using standard electron beam lithography on a silicon dioxide layer coated with PMMA resist and a pattern written directly in the resist with a scanned electron beam. The resist is developed and stripped as described above, and the grating then etched in the indium phosphide surface, the end result being to produce a fine grating with a typical pitch of 0.5µm. Reference is further directed to D. C. Shaver; "Alignment of Liquid Crystals by Surface Gratings" Technology Report 538, Lincoln Laboratory, MIT, 31 October 1979.

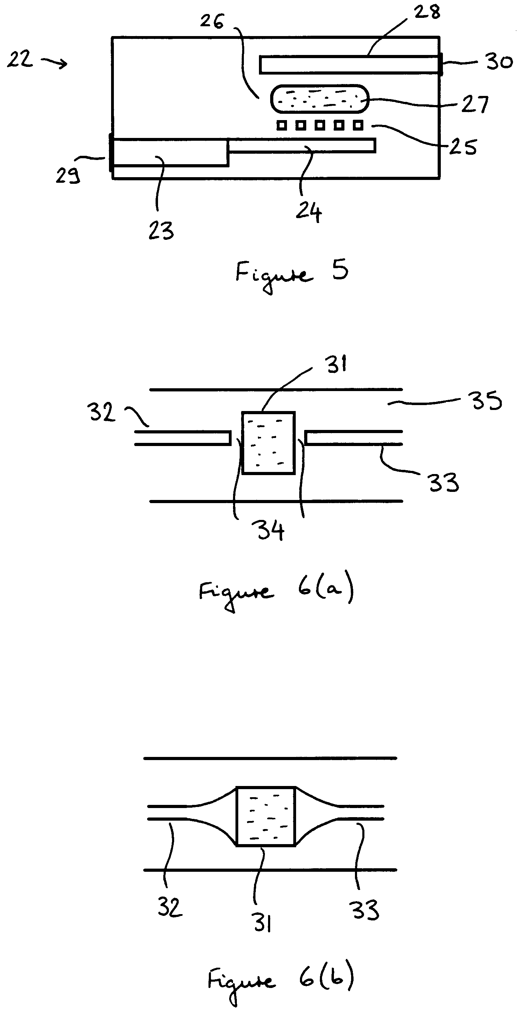

A 5µm thick layer of quaternary material 18 is then grown by atmospheric pressure MOVPE, preferably using the technique described in EP-B-117051, onto the area covered by the grating, and then etched to the desired cavity dimensions and shape, as shown in Figure 4(b). The dimensions of the cavity depend on its function, with a width of, for example, 40µm, and a length ranging from several mm where its function is to provide coupling between two waveguides, as shown in the embodiment of Figure 5, down to, for example, 10µm where a butt coupled cavity is required as in the devices of Figures 6(a) and (b). A further surface grating 6b with similar pitch and thickness to the first grating 6a is then formed into the top of the quaternary layer, using the same lithographic techniques as before, as shown in Figure 4(c). The layer of indium phosphide 4 is then grown to a depth of, for example, 7µm over the quaternary layer 18 by atmospheric pressure MOVPE, as shown in Figure 4(d), again preferably using the technique of EP-B-117051. This layer contains an imprint of the surface grating in the quaternary layer so that when the quaternary layer is removed, the alignment grating remains in place. The reversal of this image grating has no effect on its operation as an alignment means for the liquid crystal material.

For thin liquid crystal layers, for example below 10µm, it may be possible to achieve adequate alignment of the liquid crystal material by the presence of the first grating 6a on the substrate layer 2 only, the formation of a further surface grating 6b being unnecessary.

Prior to forming the slot 8, the indium phosphide 4 on either side of the quaternary layer 18 is heavily doped, for example by Zn-doping to a doping level of 5 x 10¹⁸, using well-known doping techniques such as ion beam implantation, if necessary through a suitable mask. The doping is localised in one layer to provide electrical contact to the walls of the cavity 3 (shown in Figure 4(e)), so that a horizontal reorienting electric field may be applied to the liquid crystal material between the doped regions 20.

Referring to Figure 4(e), the slot 8, which may be 5µm wide, is formed in the indium phosphide layer 4 by photolithography and non-selective etching, for example, using a bromine/methanol mixture, to provide access to the quaternary layer 18. A selective wet etchant, typically a sulphuric acid:hydrogen peroxide:water mixture, is introduced onto the quaternary material through the slot. This etches the quaternary material at a much faster rate than the indium phosphide, typically in the ratio 100 : 1, so as to allow the cavity 3 to be formed by etching away the quaternary layer 18 (shown in Figure 4(d)) through the slot 8.

Once the quaternary material has been etched away, the cavity 3 remains and, referring to Figure 4(f), the sealing layer of indium phosphide 7 is deposited, for example using MOVPE, along the slot 8 to seal it, except in the area of the wells 10 and 11 (shown in plan in Figure 2), to allow introduction of the liquid crystal material 5. Deposition along the slot causes some indium phosphide 9 to fall through the slot and deposit at the bottom of the cavity, which is not harmful as long as the slot 8 is offset from the waveguide 1.

Referring to Figure 4(f), electrodes 21 are provided to the indium phosphide layer 4 to contact the doped regions 20 by vapour deposition of titanium followed by gold.

In an alternative embodiment, the substrate 2 and the sealing layer 7 are selectively doped to provide electrical contacts to the cavity which enable a vertical electric field to be applied. In this case, the substrate may be of doped material and the sealing layer may be grown doped, for example, with a doping material such as dimethyl zinc (for p-type doping) present in the feed gas mixture.

The cavity 3 is filled by dipping the well 10 into a boat filled with liquid crystal material in a vacuum. The liquid crystal material is drawn in by capillary action. Nematic liquid crystal material known as E7 manufactured by E. Merck, Darmstadt, Germany, has been found suitable for this application.

When the cavity is full, the wells 10 and 11 shown in Figure 2 may be sealed by the application of a small amount of a standard epoxy glue.

The operation of the device will now be described, with reference to Figure 4(f). Although optical radiation is essentially confined to the waveguide region 1, the effective refractive index seen by the radiation is related to the refractive index of the waveguide material 1 as well as the substrate 2. In the area underneath the liquid crystal filled cavity 3, the effective refractive index includes a component comprised of the refractive index of the liquid crystal material 5. Further, the refractive index of the liquid crystal material 5 may be varied by applying an A.C. voltage to the cavity 3 via the electrodes 21. By applying a low AC voltage of less than 10 volts, typically 1-3 volts, at a frequency of, for example, 1kHz, the invention provides a tunable optical device which provides a refractive index change Δn of up to 0.15 - 0.2 and is tunable over a wavelength range of around 30nm. It will be understood that references to optical radiation include both visible and non-visible radiation, for example, infra-red and ultra-violet radiation.

Figure 5 shows a tunable laser device 22 (a GACTL - grating assisted coupler tunable laser) made in accordance with the method of the invention. A conventional semiconductor heterostructure laser 23, for example, as shown in S.M. Sze, Physics of Semiconductor Devices, 2nd Edition, page 726, Figure 44(g), feeds a first waveguide 24 constructed as described for the first embodiment, except that the layer of indium phosphide overlying the waveguide is grown to a depth of 1µm above the waveguide 24. This layer is patterned using electron beam lithography to produce a pattern for a grating 25 with a pitch of 0.5µm. The layer is then etched using a bromine/methanol mixture to a depth of 0.5µm to form the grating 25 over the first waveguide 24. A cavity 26 is then formed over the grating 25 and filled with liquid crystal material 27, as described in relation to the first embodiment of the invention. A second waveguide 28 is constructed over the cavity 26 using the same method as for the first waveguide. The ends of the device 22 are cleaved and polished and reflectors 29, 30 are applied to the exposed ends of the semiconductor laser 23 and second waveguide 28. These reflectors comprise, for example, five alternate thin-film layers of titania and silica and are applied by sputtering or thermal evaporation. The thickness of each layer is designed to be precisely equal to a quarter wave optical thickness at the wavelength of interest, for example, 1550nm. The coupling from the first waveguide 24 to the second waveguide 28 is assisted by the grating 25, effectively selecting only one mode from the range of cavity modes supported by the laser cavity between the reflectors 29, 30. The liquid crystal filled cavity 26 close to the grating 25 will change the effective index of the grating 25 and so shift the coupling spectrum, the main effect being to move the coupling within the laser cavity from one longitudinal mode to the next, so that tuning will largely be in jumps between modes. The device is tunable by varying the drive voltage applied to electrodes (not shown) across the liquid crystal filled cavity 26, as described for the first embodiment.

The embodiments described above have been constructed with the liquid crystal filled cavity in a different plane to that of the optical element. It is also possible to use the method of the invention to construct embodiments in which the cavity is in the same plane as the optical element.

Referring to Figure 6(a), the cavity 31 is constructed between an input waveguide 32 and an output waveguide 33. Both the guides 32, 33 and the cavity 31 are initially formed from quaternary material. During fabrication using the techniques described above for the first embodiment, the cavity etch is prevented from progressing back down the guides by an etch stop barrier 34, formed by placing an indium phosphide filled trench across the waveguide ends before overgrowing the whole structure with indium phosphide 35. Once the cavity has been filled with liquid crystal material, the refractive index difference at the interface between the liquid crystal filled cavity 31 and each waveguide 32, 33 gives rise to a significant reflection of around 10%, which may be undesirable in some applications. In these cases, an anti-reflection structure is included at the indium phosphide/ liquid crystal interfaces. This may comprise, for example, multiple quarter-wavelength width strips of alternating high and low index materials included at the termination of the semiconductor waveguides 32, 33.

Diffraction losses at the guide ends may be reduced by tapering the guides 32, 33 up to the cavity 31, as shown in Figure 6(b).

## Claims

1. A method of fabricating a tunable optical device that includes a selectively variable refractive index material in a cavity, including
overlaying a first material with a second material; forming an access opening in the second material to the first material; and
removing the first material selectively through the access opening so as to form the cavity.

2. A method according to claim 1, wherein the access opening is formed by producing a slot in the second material.

3. A method according to claim 1 or 2, wherein the first material is removed by etching and the materials are selected such that the etching rate of the first material is relatively greater than that of the second.

4. A method according to claim 3, wherein the first material is quaternary indium gallium arsenide phosphide and the second material is indium phosphide.

5. A method according to claim 4, wherein the access opening is sealed by forming a further layer of indium phosphide over it.

6. A method according to any one of the preceding claims wherein the variable refractive index material is liquid crystal material.

7. A method according to claim 6, including:
forming a surface grating on a substrate for orienting the liquid crystal material; and
forming the first material on the grating.

8. A method according to claim 6 or 7, wherein the liquid crystal material is oriented by forming a surface grating on the first material prior to overlaying it with the second material.

9. A method according to any one of claims 6 to 8 including forming electrodes for applying a voltage to vary the refractive index of the liquid crystal material.

10. A method according to any one of the preceding claims including forming an optical element to be tuned.

11. A method according to claim 10 wherein the optical element is a waveguide.

12. A method according to claim 11 wherein the optical element is a diffraction grating.

13. A method according to claim 11 wherein the waveguide comprises an input waveguide and an output waveguide.

14. A method according to any one of claims 6 to 13, when dependent on claim 6, including filling the cavity with the liquid crystal material.

15. A tunable optical device made by a method in accordance with any one of the preceding claims.
